# EUROPEAN PATENT APPLICATION

(11) **EP 1 045 018 A1**
(43) Date of publication of application: **18.10.2000**
(21) Application number: 99107644.9
(22) Date of filing: 16.04.1999
(51) Int. Cl.: C09K 11/07

(54) **Chemiluminescent composition containing phosphate ester**

(71) Applicant: Solutia Europe N.V./S.A., 1050 Brussels (BE)
(72) Inventor: Nijs, Hubert Hendrik Joseph, 3010 Kessel-Lo (BE); Billast, Karl Denis Marcel, 3061 Leefdaal (BE)
(74) Representative: Colens, Alain

(57) **Abstract**

Chemiluminescent compositions are disclosed containing at least two distinct and separated constituents, a first constituent being a mixture of an oxalate ester and a phosphate ester solvent and a second constituent being a combination of a peroxide activator and a catalyst. A fluorescer shall also be added to any one or both constituents. The compositions can serve as a source for cold light having extended useful lifetime and improved brightness.

## Description

The present invention relates to chemiluminescent compositions comprising at least two constituents (a) and (b) in reactive isolation to each other. Component (a) contains an oxalate ester in combination with a phosphate ester solvent. Component (b) contains a peroxide activator in combination with a catalyst and a solvent. The composition also contains a fluorescer which can be present in any one of constituents (a) or (b) or can be distributed over both constituents. Such compositions produce, upon mixing of the individual constituents, a chemiluminescent light, frequently termed "cold light", which can last a few hours.

Two-constituent chemiluminescent compositions are well known and have been around for a long time, several decades. Such compositions generally comprise, on one side, a mixture of an oxalate ester in a suitable solvent and, in a non-reactive isolation, a mixture of the peroxide component and the catalyst. One or both of the constituents, often the oxalate constituent, comprise one or several fluorescers. The selection of the fluorescer determines qualitative and quantitative properties, among others the color, of the chemiluminescent light produced. Chemiluminescent systems are commercially available for example in the form of plastic light sticks and can be activated by bending to thus rupture the internal container surrounding the individual constituents and provoke the mixing of the constituents. Chemiluminescent technology can be used for a variety of applications such as in baits for industrial fishing. The chemiluminescent technology generally is summarized in C&EN, January 18, 1999, page 65, by Elisabeth Wilson. US-A-3.816.326 describes selected substituted carboxymethyl oxalates and the use of such esters as chemiluminescent materials in admixture with solvents, for example substituted phthalates. US-A-5.597.517 also relates to conventional chemiluminescent compositions comprising a particular solvent, namely: a propylene glycol dihydrocarbyl ether containing one to three propylene moieties and each hydrocarbyl moiety contains up to eight carbon atoms.

The in-use properties of prior art chemiluminescent compositions are limited and substantial effort has already been spent, without actually producing significant results, towards optimizing the technology. It is therefore a first object of this invention to generate chemiluminescent compositions capable of producing an intense light source. It is another object of this invention to make available chemiluminescent compositions capable of producing light sources which last longer.

The above and other objects can now be achieved by means of chemiluminescent compositions containing, as a first constituent, an oxalate ester in combination/admixture with a narrowly and specifically defined phosphate ester solvent, and as a second constituent a peroxide-catalyst combination. A fluorescer shall be added to any one of the constituents or can be distributed over both constituents.

We have now discovered, in part, multi-component chemiluminescent composition comprising two reactively-isolated constituents which, upon admixture, can produce beneficially improved light.

Unless specified differently, percentage indications stand for "percent by weight".

The inventive multi-component compositions herein comprise at least two constituents (a) and (b) in reactive isolation to each other whereby constituent:
(a) contains an oxalate ester in combination with a phosphate ester solvent having the formula: 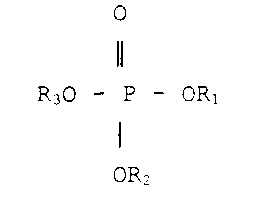 wherein R₁, R₂ and R₃ are independently selected from C₄₋₁₄-alkyl, aryl, C₁₋₆-alkylaryl, C₁₋₆-alkoxy-C₁₋₆-alkyl, C₁₋₆-alkoxyaroyl and mixtures thereof;
(b) a peroxide activator in combination with a catalyst and a solvent; and in addition contains
(c) a fluorescer which can be present in any one of the (a)or b) constituents or can be distributed over both constituents. It was found, in particular, that specific phosphate ester solvents provide chemiluminescent compositions capable of delivering superior light efficiency, particularly improved brightness and extended useful lifetime. The beneficial performance is, in part, believed to originate from the unexpected light synergism of the phosphate solvent as compared to current solvents such as phthalate- and dihydrocarbyl-derivatives.

The oxalate ester component can be represented by all known species which are known to be suitable for use in chemiluminescent compositions. Examples of the like oxalates are described in US-patents N°.: 3.597.362; 3.749.679; and 5.597.517. Examples of suitable oxalates herein are particularly recited in US patent 5.597.517, column 3, lines 43-56. Preferred oxalate esters herein are represented by bis(2,4,5-trichloro-6-carboxypentoxyphenyl) oxalate , hereinafter "CPP-oxalate", and bis(2,4,5-trichlorophenyl) oxalate, hereinafter "TCP-oxalate". The oxalate component is generally used in the art-established levels and ratios. The oxalate concentration, on a molar basis, in the oxalate/solvent combination (constituent (a)) may, for example, vary from 0.01M to 1.5M.

The phosphate ester solvent can be represented by all species embraced by the structural formula recited above. Generally preferred phosphate ester species are represented by alkyl diaryl phosphates and triaryl phosphates and mixtures thereof in a weight ratio of alkyl diaryl to triaryl of 97 : 3 to 50 : 50. Other preferred phosphate solvent species carry the following R₁, R₂ and R₃ substituents: C₆₋₁₀-alkyl, C₁₋₄-alkylaryl, C₁₋₄-alkoxy-C₁₋₄-alkyl and C₁₋₄-alkoxyaroyl. Very preferred phosphate ester species are represented by C₈₋₁₀-alkyldiarylphosphates and C₃₋₄-alkylaryldiarylphosphates or mixtures of such very preferred species in a weight ratio of from (alkyldiaryl : alkylaryldiaryl) 90 : 10 to 97 : 3. Other very preferred phosphate ester solvent species can be represented by octyldiphenylphosphate and para-tertiarybutylphenyldiphenyl phosphate or mixtures of such species in a weight ratio (octyldiphenyl : butylphenyldiphenyl) of from 95 : 5 to 60 : 40.

The oxalate ester component represents, expressed based on the sum of the oxalate ester and the phosphate ester solvent being 100%, from 1% - 40%, preferably from 3% - 35%, more preferably from 6% : 30%.

The levels of oxalate constituent (a) and peroxide activator constituent (b), expressed based on the sum of both being 100%, can vary in the range of from ((a) : (b)) 15 : 85 to 85 : 15. The composition, in addition, contains the fluorescer in a level generally with the range of from 0.001% to 1.0% based on the sum of constituents (a) and (b) and the fluorescer.

The constituents (a) and (b) are in reactive isolation i.e. these reactants are, in the composition, physically isolated for exmple with the aid of plastic barriers or equivalent means which thus block any contact of the constituents before the actual usage. The separating means (barriers) can be broken by pressure or other conventional approaches well-known and generally applied in connection with using cold light compositions.

Suitable peroxide activators, catalysts and solvents therefor (constituent (b)) are well known in the relevant domain of technology and can be used in the art-established levels and proportions (ratios). Precise species and level indications for use herein are known from US-patent 5.597.517 column 3, line 61 to column 4, line 55. In addition to the activator solvents referred to in US-A-5.597.517, column 4, lines 1-22, phosphate ester solvents, having the formula set forth in claim 1, can be used in total or partial e.g. from about 40 % to 90%, replacement of the solvents recited in the referenced passage (col. 4, lines 1-22). The molar concentration of the peroxide component (in the peroxide-activator) in the solvent used for constituent (b) can be in the range of from 0.005M to 3.0M.

Fluorescers generally, as well as preferred species for use herein, are also described in US patent 5.597.517, column 4, line 56 to column 5, line 34.

The invention is further illustrated by means of the following Examples.

### Example 1:

The solubility of CPP-oxalate (bis(2,4,5-trichloro-6-carboxypentoxyphenyl) oxalate) was tested in different solvents. The maximum concentration of CPP-oxalate was measured at -10°C. The results found were as follows:
Solvent: dibutyl phthalate; stable solution was obtained at a maximum concentration of 125 g/l (-10°C).
Solvent: butylbenzoate; stable solution was obtained at a maximum concentration of 160g/l (-10°C); and
Solvent: mixture of diphenyloctyl phosphate and paratertiary-butylphenyldiphenyl phosphate in a weight ratio of (octyldiphenyl : butylphenyldiphenyl) of 95 : 5; stable solution was obtained at a maximum concentration of 250 g/l (-10°C).

These results show the exceptional solubility of chemiluminescent oxalate in a specific phosphate ester as compared to leading commercial chemiluminescent solvents.

### Example 2:

Comparative luminosity measurements were effected as described. Three CPP-oxalate formulations were mixed as follows.

### CPP-oxalate constituent:

| | Formulations (in g) | | |
|---|---|---|---|
| Ingredient | Comparative 1: | Comparative 2: | 3 |
| CPP-oxalate | 13 | 13 | 13 |
| fluorescer(*) | 0.18 | 0.18 | 0.18 |
| dibutylphthalate | 93.82 | - | - |
| butylbenzoate | - | 93.82 | - |
| phosphate ester as used in Example 1 | - | - | 93.82 |

| | | | |
|---|---|---|---|
| (*): 1-chloro-9,10-bis(phenylethynyl)antracene. | | | |

### Activator constituent:

An activator component was prepared by mixing:
dimethylphthalate 0.8 l; t-butanol 0.2 l; sodium salicylate 180 g; and hydrogen peroxide (85%) 50 g.

7.7 g of the CPP-oxalate constituent and 3.0 g of the activator constituent were mixed in a vial of borosilicate glass of 14 mm inner diameter and admixed with the formulations entitled "comparative 1", "comparative 2" and "3" and light measurements were performed with the aid of a luminometer. The testing results, expressed in lumen, were as follows:

**TABLE**

| Time | Comparative 1; | Comparative 2; | 3 |
|---|---|---|---|
| 1 minute | 5 | 3.7 | 13 |
| 20 minutes | 2.3 | 2.2 | 8 |
| 1 hour | 1.8 | 1.3 | 5 |
| 3 hours | 0.8 | 0.5 | 2.3 |
| 8 hours | 0.28 | 0.22 | 0.76 |
| 12 hours | 0.13 | 0.10 | 0.28 |

These results quantify the genuinely unexpected and superior performance attached to composition (3) of this invention, in particular extended useful lifetime and improved brightness, as compared to actual art executions (comparative 1 and 2).

## Claims

1. A multi-component composition capable of producing a chemiluminescent light comprising at least two constituents (a) and (b) in reactive isolation to each other whereby constituent:
(a) contains an oxalate ester in combination with a phosphate ester solvent having the formula: 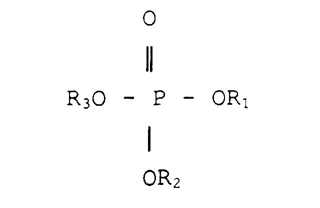 wherein R₁, R₂ and R₃ are independently selected from C₄₋₁₄-alkyl, aryl, C₁₋₆-alkylaryl, C₁₋₆-alkoxy-C₁₋₆-alkyl, C₁₋₆-alkoxyaroyl and mixtures thereof;
(b) a peroxide activator in combination with a catalyst and a solvent; and in addition contains
(c) a fluorescer which can be present in any one of the (a)or b) constituents or can be distributed over both constituents.

2. The composition according to claim 1 wherein the phosphate ester is an alkyl diaryl phosphate.

3. The composition according to claim 1 wherein the phosphate ester is a triarylphosphate.

4. The composition according to claim 1 wherein the phosphate ester is a mixture of an alkyl diaryl phosphate and a triaryl phosphate in a weight ratio of diaryl to triaryl of 97 : 3 to 50 : 50.

5. The composition according to claim 1 wherein the oxalate ester represents from 2% to 40%, expressed on the basis of the sum of the oxalate ester and the phosphate ester being 100%, and wherein the phosphate ester is a mixture of octyldiphenyl phosphate and para-tertiarybutylphenyldiphenyl phosphate in a weight ratio of diaryl phosphate to triaryl phosphate of 97 : 3 to 50 : 50.

6. The composition according to any of the preceding claims wherein the oxalate is bis(2,4,5-trichloro-6-carboalkoxyphenyl)oxalate.

7. A method wherein constituents (a) and (b) in accordance with any one of the preceding claims are brought into reactive contact to thus produce high intensity chemiluminescent light.

8. Use of a phosphate ester in accordance with claim 1 for solubilizing a diaryloxalate.
